# EUROPEAN PATENT APPLICATION

(11) **EP 4 580 103 A1**
(43) Date of publication of application: **02.07.2025**
(21) Application number: 23849399.3
(22) Date of filing: 01.08.2023
(51) Int. Cl.: H04L 5/00

(54) **METHOD AND DEVICE FOR USE IN WIRELESS COMMUNICATION NODE**

(30) Priority: 04.08.2022 CN 202210931070
(71) Applicant: SHANGHAI LANGBO COMMUNICATION TECHNOLOGY COMPANY LIMITED, Shanghai 200240 (CN)
(72) Inventor: WANG, Ping, Shanghai 201206 (CN); ZHANG, Xiaobo, Shanghai 201206 (CN)
(74) Representative: Laqua, Bernd Christian Kurt
(86) International application number: PCT/CN2023/110509
(87) International publication number: WO 2024/027693

(57) **Abstract**

The present application discloses a method and apparatus use in a node for wireless communication node. The node receives a first message set; receives a first DCI on a first cell; and sends at least a first CSI Reporting on a PUSCH of a second cell. The first message set comprises a first message, the first message is used to indicate a first trigger state set, the first message being configured to the first cell, the first trigger state set comprising at least one trigger state; the first DCI is used to schedule a PUSCH on at least one cell, the second cell being one cell of at least one cell; the first DCI comprises a first domain, and the first domain is used to trigger the first CSI Reporting; the first domain indicates a target trigger state from the dependent trigger set, and the target trigger state is used to configure the first CSI Reporting; the dependent trigger state set is related to at least one cell. This approach improves flexibility and CSI transmission reliability.

## Description

### Technical Field

The present application relates to transmission methods and devices in wireless communication systems, in particular to schemes and apparatuses related to wireless communication systems and Channel Status Information (CSI).

### Background Art

In traditional wireless communication, User Equipment (UE) reporting may include at least one of a variety of ancillary information, such as CSI, Beam Management-related ancillary information, location-related ancillary information, and the like. Wherein, CSI includes at least one of CSI-Reference Signal Resource Indicator (CRI), Rank Indicator (RI), Precoding Matrix Indicator (PMI), or Channel Quality Indicator (CQI).

The network device selects the appropriate transmission parameters for UE based on the UE reporting, such as residing in the cell, Modulation and Coding Scheme (MCS), Transmitted Precoding Matrix Indicator (TPMI), Transmission Configuration Indicator (TCI), etc. Further, the UE Reporting may be used to optimize network parameters such as better cell coverage, switch base stations based on the UE location, and the like.

In New Radio (NR) systems, CSI Reporting may be periodic, semi-persistent, or aperiodic. Semi-persistent CSI reporting needs to be activated by Downlink Control Information (DCI) or Medium Access Control Layer Control Element (MAC CE), and non-cyclical CSI reporting needs to be triggered by DCI.

### Summary of Invention

In the NR system, the Physical Uplink Shared Channel (PUSCH)/Physical Downlink Shared Channel (PDSCH) of one DCI scheduling a plurality of cells is proposed. The inventor has found through research that in the present application scenario, the existing CSI reporting trigger schemes may no longer be applicable.

Disclosed in the present application are a solution to the above problems. It should be noted that although the original intention of this application is to describe a scenario in which one DCI schedules PUSCH/PDSCH transmissions for a plurality of cells, the application can also be applied to scenarios where one DCI schedules PUSCH/PDSCH transmissions for a single cell. Furthermore, adopting an unified design scheme for different scenarios (including but not limited to one DCI scheduling PUSCH/PDSCH for a plurality of cells and one DCI scheduling PUSCH/PDSCH for a single cell) also helps reduce hardware complexity and cost. In the absence of conflicts, the embodiments of any of the nodes of the present application and the features of the embodiments may be applied to any of the other nodes. In the absence of conflicts, the embodiments of the present application and the features in the embodiments may be combined with each other arbitrarily.

As an embodiment, the interpretation of terminology in the present application is the definition of a specification protocol TS36 series, referring to 3GPP.

As an embodiment, the interpretation of terminology in the present application is the definition of a specification protocol TS38 series, referring to 3GPP.

As an embodiment, the interpretation of terminology in the present application is the definition of a specification protocol TS37 series, referring to 3GPP.

As an embodiment, the interpretation of terminology in the present application refers to the definitions in the specifications protocol of Institute of Electrical and Electronics Engineers (IEEE).

Disclosed in the present application are a method for use in a first node for wireless communication, wherein it comprises:
receiving a first message set, wherein the first message set includes a first message, and the first message being used to indicate a first trigger state set, and the first message being configured for a first cell, and the first trigger state set comprising at least one trigger state; receiving a first DCI on the first cell, wherein the first DCI is used to schedule PUSCH in at least one cell;
sending at least a first CSI Reporting on the PUSCH of a second cell, and the second cell is one cell in at least one cell;
wherein the first DCI comprises a first domain, and the first domain in the first DCI is used to trigger the first CSI Reporting; the first domain in the first DCI indicates a target trigger state from a dependent trigger state set, and the target trigger state is used to configure the first CSI Reporting; the dependent trigger state set is associated with at least one cell; when at least one cell includes only the second cell, the dependent trigger state set is the first trigger state set; when at least one cell includes a third cell, the dependent trigger state set is the second trigger state set.

As an embodiment, the above method can adjust the trigger state set dependent on the first domain based on the cells scheduled by the first DCI, thereby improving scheduling flexibility.

As an embodiment, the above method can adjust the trigger state set dependent on the first domain based on the cells scheduled by the first DCI, thereby reducing redundant overhead.

Specifically, according to one aspect of the present application, for the methods described above, wherein it comprises:
performing measurements on a first Reference Signal (RS) resource group;
wherein, the measurement performed on the first RS resource set is used to calculate the first CSI, and the target trigger state is used to determine the first RS resource group.

Specifically, according to one aspect of the present application, for the above described method, wherein the first message indicates a first *CSI-AperiodicTriggerStateList,* and the first trigger state set and the second trigger state set both belong to the first *CSI-AperiodicTriggerStateList.*

As an embodiment, the above method achieves load balancing and reduces CSI omission.

Specifically, according to one aspect of the present application, for the method described above, wherein the first message set comprises a second message, and the first message and the second message indicating a first *CSI-AperiodicTrigerStateList* and a second *CSI-AperiodicTriggerStateList,* respectively, and the first trigger state set and the second trigger state set belong to the first *CSI-AperiodicTrigerStateList and* the second *CSI-AperiodicTrigerStateList*, respectively.

As an embodiment, the above methods have better compatibility.

Specifically, according to one aspect of the present application, for the method described above, wherein the second message being configured to the second cell.

Disclosed in the present application are a method for use in a second node for wireless communication, wherein it comprises:
sending a first message set, wherein the first message set includes a first message, and the first message being used to indicate a first trigger state set, and the first message being configured for a first cell, and the first trigger state set comprising at least one trigger state; sending a first DCI on the first cell, wherein the first DCI is used to schedule PUSCH on at least one cell;
receiving at least a first CSI Reporting on the PUSCH of a second cell, and the second cell being one of at least one cells;
wherein the first DCI comprises a first domain, and the first domain in the first DCI is used to trigger the first CSI Reporting; the first domain in the first DCI indicates a target trigger state from a dependent trigger state set, and the target trigger state is used to configure the first CSI Reporting; the dependent trigger state set is associated with at least one cell; when at least one cell includes only the second cell, the dependent trigger state set is the first trigger state set; when at least one cell includes a third cell, the dependent trigger state set is the second trigger state set.

Specifically, according to one aspect of the present application, for the methods described above, wherein it comprises:
sending a reference signal on a first RS resource group;
wherein, the measurement performed on the first RS resource set is used to calculate the first CSI, and the target trigger state is used to determine the first RS resource group.

Specifically, according to one aspect of the present application, for the above described method, wherein the first message indicates a first *CSI-AperiodicTriggerStateList*, and the first trigger state set and the second trigger state set both belong to the first *CSI-AperiodicTriggerStateList.*

Specifically, according to one aspect of the present application, for the method described above, wherein the first message set comprises a second message, and the first message and the second message indicating a first *CSI-AperiodicTrigerStateList* and a second *CSI-AperiodicTriggerStateList,* respectively, and the first trigger state set and the second trigger state set belong to the first *CSI-AperiodicTrigerStateList and* the second *CSI-AperiodicTrigerStateList*, respectively.

Specifically, according to one aspect of the present application, for the method described above, wherein the second message being configured to the second cell.

Disclosed in the present application are a first node for wireless communication, wherein it comprises:
a first receiver receiving a first message set, wherein the first message set includes a first message, and the first message being used to indicate a first trigger state set, and the first message being configured for a first cell, and the first trigger state set comprising at least one trigger state; receiving a first DCI on the first cell, wherein the first DCI is used to schedule PUSCH on at least one cell;
a first transmitter sending at least a first CSI Reporting on a PUSCH of a second cell, the second cell being one of at least one cells;
wherein the first DCI comprises a first domain, and the first domain in the first DCI is used to trigger the first CSI Reporting; the first domain in the first DCI indicates a target trigger state from a dependent trigger state set, and the target trigger state is used to configure the first CSI Reporting; the dependent trigger state set is associated with at least one cell; when at least one cell includes only the second cell, the dependent trigger state set is the first trigger state set; when at least one cell includes a third cell, the dependent trigger state set is the second trigger state set.

Disclosed in the present application are a second node for wireless communication, wherein it comprises:
a second transmitter sending a first message set, wherein the first message set includes a first message, and the first message being used to indicate a first trigger state set, and the first message being configured for a first cell, and the first trigger state set comprising at least one trigger state; sending a first DCI on the first cell, wherein the first DCI is used to schedule PUSCH on at least one cell;
a second receiver receiving at least a first CSI Reporting on a PUSCH of a second cell, the second cell being one cell in at least one cell;
wherein the first DCI comprises a first domain, and the first domain in the first DCI is used to trigger the first CSI Reporting; the first domain in the first DCI indicates a target trigger state from a dependent trigger state set, and the target trigger state is used to configure the first CSI Reporting; the dependent trigger state set is associated with at least one cell; when at least one cell includes only the second cell, the dependent trigger state set is the first trigger state set; when at least one cell includes a third cell, the dependent trigger state set is the second trigger state set.

As an embodiment, the present application has the following advantages over conventional schemes:
Increased flexibility;
Reduced signaling overhead;
Optimized the reliability of the CSI transmission.

### Description of Accompanying Drawings

Other features, objects, and advantages of the present application will become more apparent by reading the detailed description of the non-limiting embodiments with reference to the following drawings:
FIG. 1 illustrates a flow diagram of a first message set, a first DCI, and a first CSI Reporting according to one embodiment of the present application;
FIG. 2 illustrates a schematic diagram of a network architecture according to one embodiment of the present application;
FIG. 3 illustrates a schematic diagram of an embodiment of a wireless protocol architecture for an user plane and a control plane according to one embodiment of the present application;
FIG. 4 illustrates a schematic diagram of a first communications device and a second communications device according to one embodiment of the present application;
FIG. 5 illustrates a flow diagram of wireless transmission according to one embodiment of the present application;
FIG. 6 illustrates an illustrative diagram of a first DCI structure according to one embodiment of the present application;
FIG. 7 illustrates a schematic diagram of the relationship between a first message set, a first message, a first *CSI-AperiodicTriggerList*, a first trigger state set, and a second trigger state set according to one embodiment of the present application;
FIG. 8 illustrates a schematic diagram of the relationship between a first message set, a first message, a second message, a first *CSI-AperiodicTriggerList*, a second *CSI-AperiodicTriggerList*, a first trigger state set, and a second trigger state set according to another embodiment of the present application;
FIG. 9 illustrates a schematic diagram of a second message configured to a second cell according to one embodiment of the present application;
FIG. 10 illustrates a structural block diagram of a processing apparatus for use in a first node according to one embodiment of the present application;
FIG. 11 illustrates a structural block diagram of a processing apparatus for use in a second node according to one embodiment of the present application.

### Specific Implementation Method

The technical solution of the present application will be described in further detail below in conjunction with the accompanying drawings, and it is to be noted that, in the absence of conflicts, the embodiments of the present application and the features in the embodiments may be combined with each other arbitrarily.

### Embodiment 1

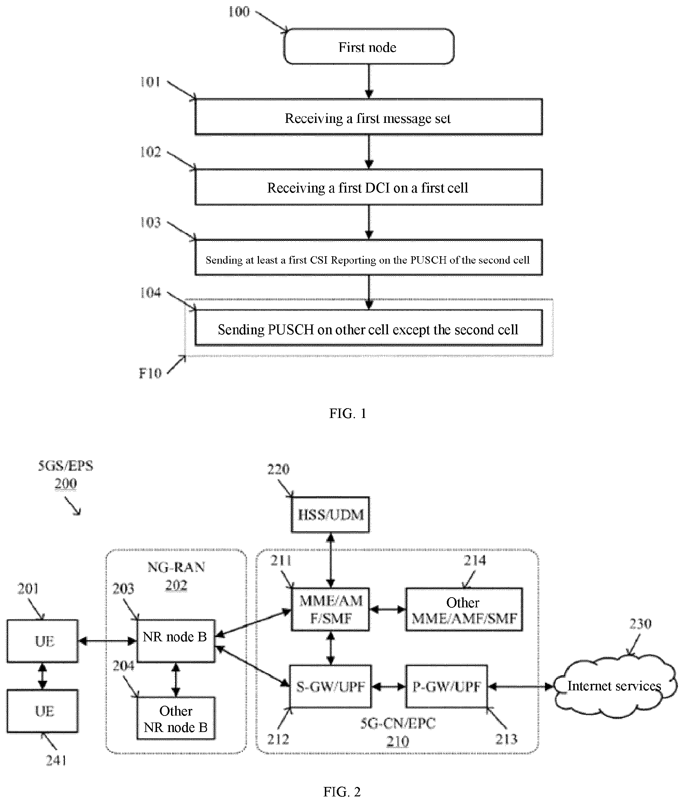

Embodiment 1 exemplifies a flow diagram of a first message set, a first DCI and a first CSI Reporting according to one embodiment of the present application, as shown in FIG. 1. In FIG. 1, each box represents a step. Specifically, the sequence of steps in the box does not represent a specific temporal relation between steps, and the steps in box F10 are optional.

The first node 100 receives a first message set in step 101, the first message set comprising a first message, and the first message being used to indicate a first trigger state set, the first message being configured for a first cell, and the first trigger state set comprising at least one trigger state; in step 102, a first DCI is received on the first cell, and the first DCI being used to schedule PUSCH on at least one cell; in step 103, at least a first CSI report is transmitted on the PUSCH of a second cell, and the second cell being one cell in at least one cell; in step 104, PUSCH is respectively transmitted on other cells excluding the second cell, and the other cells excluding the second cell being the other cells excluding the second cell in at least one cell.

In Embodiment 1, the first DCI comprises a first domain, and the first domain in the first DCI is used to trigger the first CSI Reporting; the first domain in the first DCI indicates a target trigger state from a dependent trigger state set, and the target trigger state is used to configure the first CSI Reporting; the dependent trigger state set is associated with at least one cell; when at least one cell includes only the second cell, the dependent trigger state set is the first trigger state set; when at least one cell includes a third cell, the dependent trigger state set is the second trigger state set.

As an embodiment, the DCI refers to: Downlink Control Information.

As an embodiment, the CSI refers to: Channel State Information.

As an embodiment, the PUSCH refers to: Physical Uplink Shared Channel.

As an embodiment, the first message set is carried by higher layer signaling.

As an embodiment, the first message set is carried by Radio Resource Control (RRC) signaling.

As an embodiment, the first message set is carried by the RRC IE (Information Element).

As an embodiment, the first message set includes a RRC IE.

As an embodiment, the first message set includes a *CSI-MeasConfig* IE.

As an embodiment, the first message set includes information in all or part of the domain in a *CSI-MeasConfig* IE.

As an embodiment, the first message set consists of the first message.

As an embodiment, the first message set includes another message in addition to the first message.

As a sub-embodiment of the above embodiment, the other message in addition to the first message and the first message are carried by a different RRC IE, respectively.

As a sub-embodiment of the above embodiment, the other message and the first message are respectively carried by different domains in the same RRC IE.

As an embodiment, the first message is carried by a higher layer signaling.

As an embodiment, the first message is carried by a RRC signaling.

As an embodiment, the first message is carried by a RRC IE.

As an embodiment, the first message includes a RRC IE.

As an embodiment, the first message includes a *CSI-MeasConfig* IE.

As an embodiment, the first message includes information in all or part of the domain in *CSI-MeasConfig* IE.

As an embodiment, the first message is a *CSI-MeasConfig* IE.

As an embodiment, the first message includes a *CSI-AperiodicTriggerStateList* IE.

As an embodiment, the first message includes information in all or part of the domain in a *CSI-AperiodicTrigerStateList* IE.

As an embodiment, the first message is a *CSI-AperiodicTriggerStateList* IE.

As an embodiment, the first cell is a serving cell of the first node 100.

As an embodiment, the first node 100 performs a secondary serving cell addition for the first cell.

As an embodiment, the *sCellToAddModList* or *sCellToAddListSCG* newly received by the first node 100 includes the first cell.

As an embodiment, the first node 100 is assigned *SCelllndex* or *ServCellIndex* for the first cell.

As an embodiment, a RRC connection has been established between the first node 100 and the first cell. As an embodiment, the first cell is Special Cell (SpCell) or Seondatry Cell (SCell) of the first node 100.

As an embodiment, the meaning of the first message being configured to a first cell includes: The first message belongs to *the ServingCellConfig* IE of the first cell.

As an embodiment, the meaning of the first message being configured to a first cell includes: The first message belongs to *the BWP-Downlink* IE of the first cell.

As an embodiment, the meaning of the first message being configured to a first cell includes: The first message belongs to the *CSI-MeasConfig* IE configured for the first cell.

As an embodiment, the meaning of the first message being configured to a first cell includes: The first message belongs to a *BWP-DownlinkDedicated* IE that configures the first cell.

As an embodiment, the first DCI is transmitted in Physical Downlink Control Channel (PDCCH) in a first cell.

As an embodiment, the frequency domain resource occupied by the first DCI belongs to the first cell.

As an embodiment, PUSCH on at least one cell scheduled by the first DCI includes PUSCH on the first cell.

As an embodiment, PUSCH on at least one cell of the first DCI scheduling includes only PUSCH on the second cell.

As an embodiment, PUSCH on at least one cell of the first DCI scheduling includes PUSCH on another cell in addition to the second cell.

As an embodiment, the first DCI includes the scheduling information of PUSCH in each of at least one cell, including one or more of time domain resources, frequency domain resources, MCS, Demodulation reference signal port (DMRS ports), Hybrid Automatic Repeat-reQuest process number (HARQ Process Number), Redundancy version (RV), New Data Indicator (NDI), Antenna ports, Sounding Reference Signal request (SRS request).

As an embodiment, the cell configured by *the ServingCellConfig* IE of the *ControlResourceSet* IE of the Control resource set (CORESET) of the first DCI is the first cell.

As an embodiment, the *SpCellConfig* or *SCellConfig* indicated cell index of *the ControlResourceSet* IE of the CORESET of the first DCI is configured to be equal to the cell index of the first cell.

As an embodiment, the first DCI consists of a first domain.

As an embodiment, the first DCI includes another DCI domain in addition to the first domain.

As an embodiment, the first domain in the first DCI includes at least one DCI domain.

As an embodiment, the first domain in the first DCI comprises a plurality of DCI domains.

As an embodiment, the first domain in the first DCI is a DCI domain.

As an embodiment, the first domain in the first DCI includes a *CSI request.*

As an embodiment, the first domain in the first DCI includes all or part of the information in a *CSI request.*

As an embodiment, the first domain in the first DCI is a *CSI request.*

As a sub-example of the above embodiment, the first domain includes up to 6 bits.

As a sub-example of the above embodiment, the number of bits of the first domain is indicated by *the reportTriggerSize.*

As an embodiment, the second cell is a serving cell of the first node 100.

As an embodiment, the first node 100 performs a secondary serving cell addition for the second cell.

As an embodiment, the first node 100 includes the second cell of the newly received *sCellToAddModList* or *sCellToAddModListSCG.*

As an embodiment, the first node 100 is assigned *SCellIndex* or *ServCellIndex* for the second cell.

As an embodiment, a RRC connection has been established between the first node 100 and the second cell.

As an embodiment, the second cell is SpCell or SCell of the first node 100.

As an embodiment, the other cells excluding the second cell being the other cells excluding the second cell in at least one cell.

As an embodiment, the PUSCH sent on each of the other cells except the second cell includes a Uplink shared channel (UL-SCH).

As an embodiment, the PUSCH transmitted on each of the other cells except the second cell comprises a plurality of UL-SCHs.

As an embodiment, the PUSCH that is sent on each of the other cells except the second cell is a UL-SCH.

As an embodiment, the PUSCH sent on each of the other cells except the second cell includes a CSI Reporting.

As an embodiment, the PUSCH sent on each of the other cells other than the second cell comprises a plurality of CSI Reporting.

As an embodiment, the PUSCH that is sent on each of the other cells except the second cell is a CSI Reporting.

As an embodiment, each of at least one cells is one of the serving cells of the first node 100.

As an embodiment, the first node 100 performs a secondary serving cell addition for each of at least one cells.

As an embodiment, the first node 100 includes each of at least one cells of the newly received *sCellToAddModList* or *sCellToAddListSCG.*

As an embodiment, the first node 100 is assigned *SCellIndex* or *ServCellIndex* for the second cell.

As an embodiment, a RRC connection has been established between the first node 100 and each of at least one cells.

As an embodiment, the serving cell is defined in 3GPP TS 38.331.

As an embodiment, the PUCCH SCell is defined in 3GPP TS38.300 and 3GPP TS38.331.

As an embodiment, at least one cell has the same numerology.

As an embodiment, at least one cell has the same subcarrier spacing configuration.

As an embodiment, at least one cell includes the first cell.

As an embodiment, at least one cell includes only a second cell.

As an embodiment, at least one cell includes another cell in addition to the second cell.

As an embodiment, the second cell and first cell are the same cell.

As an embodiment, the second cell and the first cell have the same Physical Cell Identity (PCI). As an embodiment, the second cell is another cell different from the first cell.

As an embodiment, the second cell and the first cell have a different PCI.

As an embodiment, the third cell and the first cell are the same cell.

As an embodiment, the third cell and the first cell have the same PCI.

As an embodiment, the third cell is another cell that is different from the first cell.

As an embodiment, the third cell and first cell have a different PCI.

As an embodiment, the third cell is another cell different from the second cell.

As an embodiment, the third cell and second cell have a different PCI.

As an embodiment, the first trigger state set is carried by RRC signaling.

As an embodiment, the first trigger state set is carried by the RRC IE.

As an embodiment, the first trigger state set includes all or part of the trigger states of a CSI-AperiodicTriggerStateList.

As an embodiment, the first trigger state set is a *CSI-AperiodicTriggerStateList.*

As an embodiment, the second trigger state set is carried by higher layer signaling.

As an embodiment, the second trigger state set is carried by RRC signaling.

As an embodiment, the second trigger state set is carried by the RRC IE.

As an embodiment, the second trigger state set includes all or part of the trigger states of a *CSI-AperiodicTriggerStateList.*

As an embodiment, the first message is used to indicate a second trigger state set.

As an embodiment, the first trigger state set and the second trigger state set are respectively configured.

As an embodiment, the first trigger state set and the second trigger state set belong to the same *CSI-AperiodicTriggerStateList.*

As an embodiment, the target trigger state is a *CSI-AperiodicTriggerState.*

As an embodiment, the first message is used to configure a *CSI-ReportConfig* corresponding to the first *CSI.*

As an embodiment, the first message includes *a CSI-ReportConfig* IE corresponding to the first CSI.

As an embodiment, the first message includes a *CSI-MeasConfig IE* belongs to a CSI-ReportConfigl corresponds to the first CSI.

As an embodiment, the first CSI Reporting is only transmitted on the PUSCH on the second cell.

As an embodiment, the first CSI Reporting is only transmitted on the second cell on a PUSCH scheduled by the first DCI.

As an embodiment, the first domain in the first DCI indicates a trigger state of the first CSI.

As an embodiment, the first domain in the first DCI indicates a trigger state of *CSI-ReportConfig* corresponding to the first CSI.

As an embodiment, the trigger state of *CSI-ReportConfig* corresponding to the first CSI is configured for RRC signaling.

As an embodiment, the trigger state of *CSI-ReportConfig* corresponding to the first CSI is configured by *CSI-AperiodicTriggerStateList* IE.

As an embodiment, the trigger state of the *CSI-ReportConfig* corresponding to the first CSI is configured in a first trigger state set.

As an embodiment, the trigger state of *CSI-ReportConfig* corresponding to the first CSI is configured with a second trigger state set.

As an embodiment, the first CSI includes at least one of CQI, PMI, CRI, Layer Indicator (LI), RI, SS/PBCH Block Resource Indicator (SSBRI), Layer 1 Reference Signal Received Power (L1-RSRP), Layer 1 Signal-to-Noise and Interference Ratio (L1-SINR).

In general, how to calculate a CSI is determined by the hardware device provider itself, and a non-limiting embodiment is described below with CQI as an example:
The first node 100 first performs channel measurement for a CSI-RS resource to obtain a channel parameter matrix ***H***_{*r*×}*ₜ,* wherein *r* and *t* represent the number of receive antennas and the number of antenna ports used for transmission, respectively; under the condition of using a precoding matrix ***W***_{*t*×*l*}, the precoded channel parameter matrix ***H***_{*r*×*t*} ·***W***_{*t*×*l*} is obtained, where *l* represents the rank or the number of layers; an equivalent channel capacity of ***H***_{*r*×*t*} ·***W***_{*t*×*l*} is calculated based on criteria such as SINR, Exponential Effective SINR Mapping (EESM), or Received Block mean mutual Information Ratio (RBIR), then the CQI is determined based on the equivalent channel capacity, for example, by using a lookup table. A calculation of generally equivalent channel capacity requires the first node estimating noise and interference. In general, the mapping between the values of equivalent channel capacity to CQI depends on the performance of the receiver, or hardware-related factors such as modulation methods. The pre-coding matrix ***W***_{*t*×*l*}is typically feedback by the first node through RI or PMI.

Compared to CQI, the L1-SINR does not carry the information of the receiver, thus omitting the calculation of equivalent channel capacity described above.

### Embodiment 2

Embodiment 2 illustrates a schematic diagram of a network architecture according to one embodiment of the present application, as shown in FIG. 2.

FIG. 2 illustrates a network architecture of a Long-Term Evolution (LTE), Long-Term Evolution Advanced (LTE-A) and future 5G system. The network architecture of LTE, LTE-A, and future 5G system is called Evolved Packet System (EPS). The 5G NR or LTE network architecture may be referred to as 5G System (5GS)/EPS 200 or some other suitable term. The 5GS/EPS 200 may include one or more User Equipment (UE) 201, one UE241 for Sidelink communication with UE201, a Next Generation Radio Access Network (NG-RAN) 202, a 5G Core Network (5G-CN)/Evolved Packet Core (EPC) 210, a Home Subscriber Server (HSS)/Unified Data Management (UDM) 220, and an Internet service 230. The 5GS/EPS 200 may be interconnected with other access networks, but these entities/interfaces are not shown for simplicity. As shown in FIG. 2, the 5GS/EPS 200 provides packet exchange services, however it will be readily understood by those skilled in the art that various concepts presented throughout the present application can be extended to a network providing circuit exchange services. The NG-RAN 202 includes NR node B(gNB) 203 and other gNB 204. The gNB 203 provides user and control plane protocol termination towards the UE 201. The gNB 203 may be connected to the other gNB 204 via an Xn interface (e.g., backhaul). The gNB 203 may also be referred to as a base station, a base transceiver station, a radio base station, a radio transceiver, a transceiver function, a Base Service Set (BSS), an Extension Service Set (ESS), a Transmitter Receiver Point (TRP), or some other suitable term. gNB 203 provides access points to 5G-CN/EPC 210 for UE 201. Examples of the UE 201 include cellular phones, smart phones, Session Initiation Protocol (SIP) phones, laptop computers, Personal Digital Assistant (PDA), satellite radios, global positioning systems, multimedia devices, video devices, digital audio players (e.g., MP3 players), cameras, game consoles, drones, aircraft, narrow band physical network devices, machine type communications devices, land vehicles, automobiles, wearable devices, or any other similar functional apparatuses. Those of ordinary skill in the art may also refer to the UE 201 as a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handheld, an user agent, a mobile client, a client, or some other suitable term. The gNB 203 is connected to the 5G-CN/EPC 210 via an S1/NG interface. The 5G-CN/EPC 210 includes Mobility Management Entity (MME)/Authentication Management Field (AMF)/Session Management Function (SMF) 211, other MME/AMF/SMF 214, Service Gateway (S-GW)/User Plane Function (UPF) 212 and Packet Date Network Gateway (P-GW)/UPF 213. The MME/AMF/SMF 211 is a control node that processes signaling between the UE 201 and the 5G-CN/EPC 210. Generally, the MME/AMF/SMF 211 provides carrier and connection management. All user Internet Protocol (IP) packets are transmitted via the S-GW/UPF 212, which is itself connected to the P-GW/UPF 213. The P-GW provides UE IP address assignment along with other functions. The P-GW/UPF 213 is connected to the Internet service 230. The Internet service 230 includes an operator's corresponding Internet protocol service, which may specifically include the Internet, an intranet, an IP Multimedia Subsystem (IMS) and a Packet switching service.

As an embodiment, the first node in the present application includes the UE 201.

As an embodiment, the second node in the present application includes the gNB 203.

As an embodiment, the wireless link between the UE 201 and the gNB 203 includes a cellular network link.

As an embodiment, the sender of the first message set includes the gNB 203.

As an embodiment, the receiver of the first message set includes the UE 201.

As an embodiment, the sender of the first DCI includes the gNB 203.

As an embodiment, the receiver of the first DCI includes the UE 201.

As an embodiment, the sender of the first CSI Reporting includes the UE 201.

As an embodiment, the receiver of the first CSI Reporting includes the gNB 203.

As an embodiment, the UE 201 supports a single DCI to schedule PDSCH/PUSCH of a plurality of cells.

### Embodiment 3

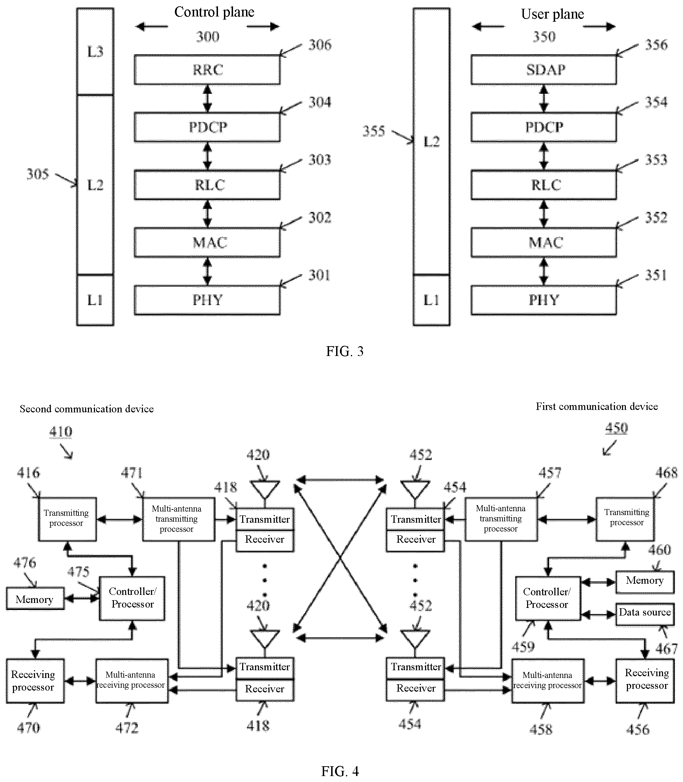

Embodiment 3 exemplifies a schematic diagram of an embodiment of a wireless protocol architecture for the user plane 350 and the control plane 300, according to one embodiment of the present application, as shown in FIG. 3.

FIG. 3 illustrates a schematic diagram of an embodiment of a radio protocol architecture for the user plane 350 and the control plane 300, FIG. 3 shows, with three layers, a radio protocol architecture for a first communication node device (Road Side Unit (RSU) in UE or Vehicle to Everything (V2X), in-vehicle device or in-vehicle communication module) and a second node device (RSU in gNB, UE or V2X, in-vehicle device or in-vehicle communication module), or control plane 300 between two UEs: Layer 1 (L1), Layer 2 (L2), and Layer 3 (L3). L1 is the lowest layer and implements various PHY (physical layer) signal processing functions. The L1 layer will be referred to herein as PHY 301. The L2 305 is over the PHY 301 and is responsible for the link between the first node device and the second node device, or between two UEs, through the PHY 301. The L2 305 includes a MAC sublayer 302, a Radio Link Control (RLC, wireless link layer control protocol) sublayer 303 and a Packet Data Convergence Protocol (PDCP) sublayer 304, which are terminated at a second node device. The PDCP sublayer 304 provides multiplexes between different radio carriers and logical channels. The PDCP sublayer 304 also provides security by encrypting the data packet and inter-cell movement support for the first communication node device between the second communication node device. The RLC sublayer 303 provides segmentation and reassembly of the upper layer data packet, retransmission of the missing data packet, and reordering of the data packet to compensate for out-of-order reception due to HARQ. The MAC sublayer 302 provides multiplexes between logical and transmission channels. The MAC sublayer 302 is also responsible for distributing various radio resources (e.g., resource blocks) in one cell between the first communication node devices. The MAC sublayer 302 is also responsible for HARQ operations. The RRC sublayer 306 in the L3 in the control plane 300 is responsible for obtaining the radio resources (i.e., the radio carrier) and configuring the lower layer using RRC signaling between the second communication node device and the first communication node device. The radio protocol architecture of the user plane 350 includes a layer 1 (L1) and a layer 2 (L2). The radio protocol architecture for the first and second communication node devices in the user plane 350 for the physical layer 351, the PDCP sublayer 354 in the L2 layer 355, the RLC sublayer 353 in the L2 layer 355 and the MAC sublayer 352 in the L2 layer 355 is substantially the same as the corresponding layer and the sublayer in the control plane 300. However, the PDCP sublayer 354 also provides header compression for upper layer data packets to reduce radio transmission overhead. The L2 355 in the user plane 350 also includes a Service Data Adaption Protocol (SDAP) sublayer 356 that is responsible for mapping between Quality of Service (QoS) streams and Data Radio Bearer (DRB) to support diversity of the business. Although not shown, the first communication node device may have several upper layers over the L2 355, including a network layer (e.g., an IP layer) that terminates at the P-GW on the network side and an application layer that terminates at the other end of the connection (e.g., a far-end UE, a server, etc.).

As an embodiment, the wireless protocol architecture in FIG. 3 applies to the first node in the present application.

As an embodiment, the wireless protocol architecture in FIG. 3 applies to the second node in the present application.

As an embodiment, the first message set is generated at the RRC sublayer 306.

As an embodiment, the first DCI is generated at the PHY 301, or the PHY 351.

As an embodiment, the first CSI Reporting is generated at the PHY 301, or the PHY 351.

As an embodiment, the higher layer in the present application refers to a layer above the physical layer.

### Embodiment 4

Embodiment 4 exemplifies a schematic diagram of a first communications device and a second communications device according to one embodiment of the present application, as shown in FIG. 4. FIG. 4 is a block diagram of a first communications device 410 and a second communications device 450 in communication with one another over an access network.

The first communications device 410 includes a controller/processor 475, a memory 476, a receiving processor 470, a transmitting processor 416, a multi-antenna receiving processor 472, a multi-antenna transmitting processor 471, a transmitter/receiver 418, and an antenna 420.

The second communications device 450 includes a controller/processor 459, a memory 460, a data source 467, a transmitting processor 468, a receiving processor 456, a multi-antenna transmitting processor 457, a multi-antenna receiving processor 458, a transmitter/receiver 454, and an antenna 452.

In a transmission from the first communications device 410 to the second communications device 450, at the first communications device 410, an upper layer data packet from the core network is provided to the controller/processor 475. The controller/processor 475 implements the functionality of the L2. In the Downlink (DL), the controller/processor 475 provides header compression, encryption, packet segmentation and reordering, multiplexing between logical and transmission channels, and radio resource allocation to the second communications device 450 based on various priority measures. The controller/processor 475 is also responsible for HARQ operation, retransmission of the lost package, and signaling to the second communications device 450. The transmitting processor 416 and the multi-antenna transmitting processor 471 implement various signal processing functions for the L1 layer (i.e., the physical layer). The transmitting processor 416 implements coding and interleaving to facilitate Forward Error Correction (FEC) at the second communications device 450, as well as mapping of signal constellations based on various modulation schemes, such as Binary Phase Shift Keying (BPSK), Quadrature Phase Shift Keying (QPSK), M-ary Phase Shift Keying (M-PSK), and M-ary Quadrature Amplitude Modulation (M-QAM). The multi-antenna transmitting processor 471 pre-codes encoded and modulated symbols in digital space, including codebook-based pre-coding and non-codebook-based pre-coding, and beam-forming processing to generate one or more parallel streams. The transmitting processor 416 then maps each of the parallel streams to the subcarriers, multiplexes the modulated symbol with a reference signal (e.g., a frequency guide) in the time and/or frequency domain, and then uses a Inverse Fast Fourier Transform (IFFT) to produce a physical channel for the time domain multi-carrier symbol stream. The multi-antenna transmitting processor 471 then sends the simulated pre-coding/beam-forming operation for the time domain multi-carrier symbol flow. Each transmitter 418 converts the baseband multi-carrier symbol flow provided by the multi-antenna transmitting processor 471 into a radio frequency flow, which is then provided to a different antenna 420.

In transmission from the first communications device 410 to the second communications device 450, at the second communications device 450, each receiver 454 receives a signal through its respective antenna 452. Each receiver 454 resumes information modulated onto a radio frequency carrier and converts the radio frequency flow into a baseband multi-carrier symbol flow to the receiving processor 456. The receiving processor 456 and the multi-antenna receiving processor 458 implement various signal processing functions of the L1. The multi-antenna receiving processor 458 performs receive-side analog pre-coding/beam-forming operation for the baseband multi-carrier symbol flow from the receiver 454. The receiving processor 456 uses Fast Fourier Transform (FFT) to switch the base band multi-carrier symbol flow from the time domain to the frequency domain after receiving the analog pre-encoding/beam-based manipulation. **In** the frequency domain, the physical layer data signal and the reference signal are demultiplexed by the receiving processor 456, where the reference signal is used for channel estimation and the data signal is detected by the multi-antenna receiving processor 458 to recover any parallel stream destined for the second communications device 450. The symbols on each parallel stream are demodulated and restored in the receiving processor 456 and generate a soft decision. The receiving processor 456 then decodes and de-interleaves the soft decision to resume the upper layer data and control signal transmitted by the first communications device 410 over the physical channel. The upper layer data and control signal are then provided to the controller/processor 459. The controller/processor 459 implements the functions of the L2. The controller/processor 459 may be associated with the memory 460 that stores program code and data. The memory 460 may be referred to as a computer-readable medium. **In** the DL, the controller/processor 459 provides multiplexing between transmission and logical channels, packet reassembly, decryption, header decompression, control signal processing to recover the upper layer data packet from the core network. The upper layer data packet is then provided to all protocol layers above the L2. Various control signals may also be provided to L3 for L3 processing. The controller/processor 459 is also responsible for error detection using an Acknowledgment (ACK) and/or a Negative Acknowledgment (NACK) protocol to support HARQ operations.

In transmission from the second communications device 450 to the first communications device 410, at the second communications device 450, the data source 467 is used to provide the upper layer data packet to the controller/processor 459. The data source 467 represents all protocol layers above the L2. Similar to the transmission function at the first communications device 410 described in the DL, the controller/processor 459 implements header compression, encryption, packet segmentation, and reordering, and multiplexing between logical and transmission channels based on wireless resource allocation of the first communications device 410, implementing L2 functions for the user plane and control plane. The controller/processor 459 is also responsible for HARQ operation, retransmission of the lost package, and signaling to the first communications device 410. The transmitting processor 468 executes a modulation mapping, channel encoding, and the multi-antenna transmitting processor 457 pre-encodes the digital multi-antenna space, including codebook-based pre-coding and non-codebook-based pre-coding, and beam-forming processing, and then the transmitting processor 468 modulates the resulting parallel stream into multi-carrier/single-carrier symbol flows, which, after simulated precoding/beam-forming operations in the multi-antenna transmitting processor 457, are then provided to a different antenna 452 via the transmitter 454. Each transmitter 454 first converts the baseband symbol flow provided by the multi-antenna transmitting processor 457 into a radio frequency symbol flow, which is then provided to the antenna 452.

In the transmission from the second communications device 450 to the first communications device 410, the function at the first communications device 410 is similar to the receiving function at the second communications device 450 described in the transmission from the first communications device 410 to the second communications device 450. Each receiver 418 receives a radio frequency signal through its respective antenna 420, converts the received radio frequency signal into a baseband signal, and provides the baseband signal to the multi-antenna receiving processor 472 and the receiving processor 470. The receiving processor 470 and the multi-antenna receiving processor 472 collectively implement the functions of the L1. The controller/processor 475 implements the L2 function. The controller/processor 475 may be associated with the memory 476 that stores program code and data. The memory 476 may be referred to as a computer-readable medium. The controller/processor 475 provides multiplexing between transmission and logical channels, packet reassembly, decryption, header decompression, control signal processing to recover the upper layer data packet from the second communications device 450. The upper layer data packet from the controller/processor 475 may be provided to the core network. The controller/processor 475 is also responsible for error detection using the ACK and/or NACK protocols to support HARQ operations.

As an embodiment, the second communications device 450 includes: at least one processor, and at least one memory comprising computer program code; at least one memory and computer program code configured for use with at least one processor. The second communications device 450 apparatus receives at least a first message set; receives a first DCI on a first cell; and sends at least a first CSI Reporting on a PUSCH of a second cell. The first message set comprises a first message, and the first message being used to indicate a first trigger state set, the first message being configured for the first cell, and the first trigger state set comprising at least one trigger state; the first DCI is used to schedule a PUSCH on at least one cell; the second cell is one of at least one cell; the first DCI comprises a first domain, and the first domain of the first DCI is used to trigger the first CSI Reporting; the first domain in the first DCI is used to indicate target trigger state from the dependent trigger state set, and the target trigger state is used to configure the first CSI Reporting; the dependent trigger state set is related to at least one cell; when at least one cell includes only the second cell, the dependent trigger state set is the first trigger state set; when at least one cell includes a third cell, the dependent trigger state set is a second trigger state set.

As an embodiment, the second communications device 450 includes: a memory storing a computer-readable instruction program that, when executed by at least one processor, generates an action, the action comprising: receiving the first message set; receiving the first DCI on the first cell; sending at least the first CSI Reporting on a PUSCH of the second cell.

As an embodiment, the first communications device 410 includes: at least one processor, and at least one memory comprising computer program code; at least one memory and computer program code configured for use with at least one processor. The first communications device 410 apparatus sending at least the first message set; sending a first DCI on the first cell; and receiving at least the first CSI Reporting on a PUSCH of the second cell. The first message set comprises a first message, and the first message being used to indicate a first trigger state set, the first message being configured for the first cell, and the first trigger state set comprising at least one trigger state; the first DCI is used to schedule a PUSCH on at least one cell; the second cell is one of at least one cell; the first DCI comprises a first domain, and the first domain of the first DCI is used to trigger the first CSI Reporting; the first domain in the first DCI is used to indicate target trigger state from the dependent trigger state set, and the target trigger state is used to configure the first CSI Reporting; the dependent trigger state set is related to at least one cell; when at least one cell includes only the second cell, the dependent trigger state set is the first trigger state set; when at least one cell includes a third cell, the dependent trigger state set is a second trigger state set.

As an embodiment, the first communications device 410 includes: a memory storing a computer-readable instruction program that, when executed by at least one processor, generates an action, the action comprising: sending the first message set; sending the first DCI on the first cell; receiving at least the first CSI Reporting on a PUSCH of the second cell.

As an embodiment, the first node in the present application includes the second communications device 450.

As an embodiment, the second node in the present application includes the first communications device 410.

As an embodiment, at least one of {the antenna 452, the receiver 454, the receiving processor 456, the multi-antenna receiving processor 458, the controller/processor 459, the memory 460, the data sources 467} is used to receive the first message set.

As an embodiment, at least one of {the antenna 420, the transmitter 418, the transmitting processor 416, the multi-antenna emitting processor 471, the controller/processor 475, the memory 476} is used to send the first message set.

As an embodiment, at least one of {the antenna 452, the receiver 454, the receiving processor 456, the multi-antenna receiving processor 458, the controller/processor 459, the memory 460, the data sources 467} is used to receive the first DCI on the first cell.

As an embodiment, at least one of {the antenna 420, the transmitter 418, the transmitting processor 416, the multi-antenna emitting processor 471, the controller/processor 475, the memory 476} is used to transmit the first DCI over a first cell.

As an embodiment, at least one of {the antenna 420, the receiver 418, the receiving processor 470, the multi-antenna receiving processor 472, the controller/processor 475, the memory 476} is used to receive at least the first CSI Reporting on a PUSCH of the second cell.

As an embodiment, at least one of {the antenna 452, the transmitter 454, the transmitting processor 468, the multi-antenna emitting processor 457, the controller/processor 459, the memory 460, the data source 467} is used to transmit at least the first CSI Reporting on a PUSCH of the second cell.

### Embodiment 5

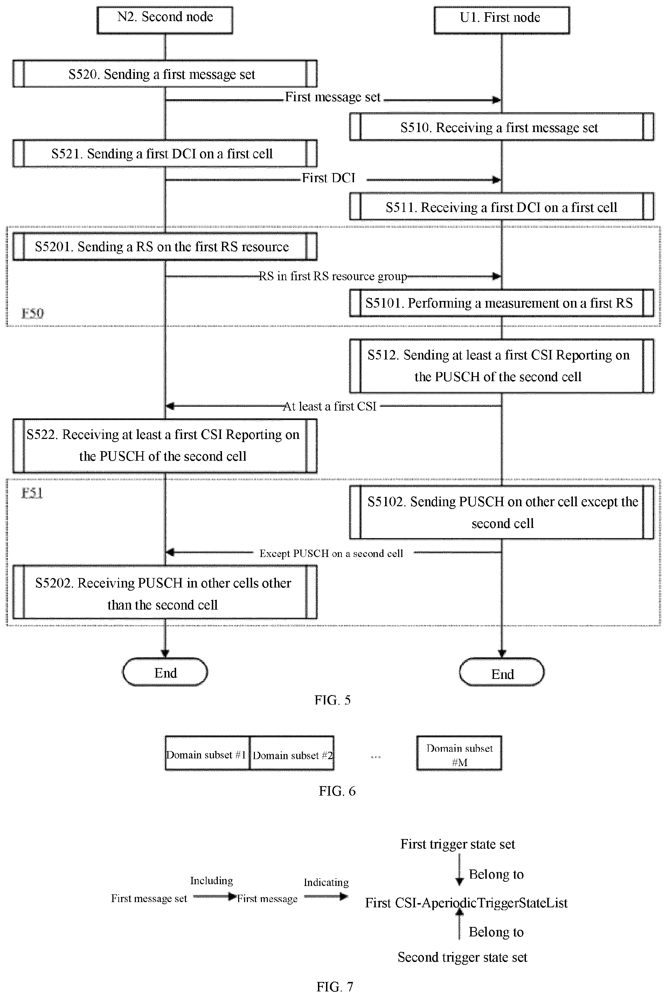

Embodiment 5 exemplifies a flow diagram of a transmission according to one embodiment of the present application. The steps in boxes F50 and F51 are optional in FIG. 5. In FIG. 5, the first node U1 and the second node N2 communicate over a wireless link. It is specifically illustrated that the sequence in the present embodiment does not limit the sequence of signal transmission and the sequence of implementation in the present application.

For the first node U1, in step S510, a first message set is received; in step S511, a first DCI is received on a first cell; in step S5101, measurement is performed on a first RS resource set; in step S512, at least a first CSI report is transmitted on the PUSCH of a second cell; in step S5102, PUSCH is respectively transmitted on other cells excluding the second cell.

For the second node N2, in step S520, a first message set is transmitted; in step S521, a first DCI is transmitted on a first cell; in step S5201, RS is transmitted on a first RS resource set; in step S522, at least a first CSI report is received on the PUSCH of a second cell; in step S5202, PUSCH is respectively received on other cells excluding the second cell.

In Embodiment 5, the first message set comprises a first message, and the first message being used to indicate a first trigger state set, the first message being configured for the first cell, and the first trigger state set comprising at least one trigger state; the first DCI is used to schedule a PUSCH on at least one cell; the second cell is one of at least one cell; the first DCI comprises a first domain, and the first domain of the first DCI is used to trigger the first CSI Reporting; the first domain in the first DCI is used to indicate target trigger state from the dependent trigger state set, and the target trigger state is used to configure the first CSI Reporting; the dependent trigger state set is related to at least one cell; when at least one cell includes only the second cell, the dependent trigger state set is the first trigger state set; when at least one cell includes a third cell, the dependent trigger state set is a second trigger state set; the measurement performed on the first RS resource group is used to calculate the first CSI, the target trigger state is used to determine the first RS resource group.

As an embodiment, the first node U1 is the first node in the present application.

As an embodiment, the second node N2 is the second node in the present application.

As an embodiment, the air interface between the second node N2 and the first node U1 includes a wireless interface between a base station device and an user equipment.

As an embodiment, the air interface between the second node N2 and the first node U1 includes a wireless interface between a relay node device and an user equipment.

As an embodiment, the air interface between the second node N2 and the first node U1 includes a wireless interface between an user equipment and the user equipment.

As an embodiment, the second node N2 is a serving cell of the first node U1 that maintains a base station.

As an embodiment, the first message set is transmitted in PDSCH.

As an embodiment, the first message is transmitted in PDSCH.

As an embodiment, each message in the first message set is transmitted in PDSCH.

As an embodiment, the first DCI is transmitted in PDCCH.

As an embodiment, the step in box F50 in FIG. 5 is present and the method used in the second node for wireless communication comprises: sending an RS on the first RS resource group.

As a sub-embodiment of the above embodiment, sending an RS on at least one RS resource in the first RS resource group.

As a sub-embodiment of the above embodiment, the first RS resource group includes at least one RS resource.

As a sub-embodiment of the above embodiment, the first RS resource group includes only one RS resource.

As a sub-embodiment of the above embodiment, the first RS resource group includes a plurality of RS resources.

As a sub-embodiment of the above embodiment, the first RS resource group includes at least one set of CSI-RS resources.

As a sub-embodiment of the above embodiment, the first RS resource group is a CSI-RS resource set.

As a sub-embodiment of the above embodiment, the first RS resource group is identified by an *NZP-CSI-RS-ResourceSetId.*

As a sub-embodiment of the above embodiment, the first RS resource group is identified by a *CSI-SSB-ResourceSetId.*

As a sub-embodiment of the above embodiment, the first RS resource group comprises at least one CSI-Interference Measurement (CSI-IM) resource set.

As a sub-embodiment of the above embodiment, the first RS resource group is a CSI-IM resource set.

As a sub-embodiment of the above embodiment, the first RS resource group includes at least one CSI-RS resource set and at least one CSI-IM resource set.

As a sub-embodiment of the above embodiment, there is one RS resource in the first RS resource group as a CSI-RS resource.

As a sub-embodiment of the above embodiment, there is an RS resource in the first RS resource group that is a Synchronization Signal (SS)/Physical Broadcast Channel (PBCH) block resource.

As a sub-embodiment of the above embodiment, there is one RS resource in the first RS resource group as a CSI-IM resource.

As a sub-embodiment of the above embodiment, any of the RS resources in the first RS resource group is a CSI-RS resource, an SS/PBCH Block resource, or a CSI-IM resource.

As a sub-embodiment of the above embodiment, any of the RS resources in the first RS resource group is a CSI-RS resource or an SS/PBCH Block resource.

As a sub-embodiment of the above embodiment, any of the RS resources in the first RS resource group is a downlink RS resource.

As a sub-embodiment of the above embodiment, any of the RS resources in the first RS resource group includes at least one RS port.

As a sub-embodiment of the above embodiment, the RS port includes a CSI-RS port.

As a sub-embodiment of the above embodiment, the RS port includes an antenna port.

As a sub-embodiment of the above embodiment, the first RS resource group is a CSI-RS resource set, and the CSI-RS resource set is identified by an *NZP-CSI-RS-ResourceSetId.*

As a sub-embodiment of the above embodiment, the first RS resource group is a CSI-RS resource set, and the CSI-RS resource set is configured by an *NZP-CSI-RS-ResourceSet* IE.

As a sub-embodiment of the above embodiment, the first RS resource group is a CSI-RS resource set, and the CSI-RS resource set comprises at least one CSI-RS resource.

As a sub-embodiment of the above embodiment, the first RS resource group is a CSI-RS resource set, the CSI-RS resource set comprises at least CSI-RS resource, and the CSI-RS resource is identified by one *NZP-CSI-RS-ResourceId*

As a sub-embodiment of the above embodiment, the first RS resource group is a CSI-RS resource set, the CSI-RS resource set comprises at least one CSI-RS resource, and the CSI-RS resource is configured by an *NZP-CSI-RS-Resource* IE.

As a sub-embodiment of the above embodiment, the first RS resource group is a CSI-IM resource set identified by a *CSI-IM-ResourceSetId.*

As a sub-embodiment of the above embodiment, the first RS resource group is a CSI-IM resource set, and the CSI-IM resource set is configured by a *CSI-IM-ResourceSet* IE.

As a sub-embodiment of the above embodiment, the first RS resource group is a CSI-IM resource set that includes at least one CSI-IM resource.

As a sub-embodiment of the above embodiment, the first RS resource group is a CSI-IM resource set comprising at least one CSI-IM resource identified by a *CSI-IM-ResourceId.*

As a sub-embodiment of the above embodiment, the first RS resource group is a CSI-IM resource set, the one CSI-IM resource set comprises at least one CSI-IM resource, and the one CSI-IM resource is configured by a *CSI-IM-Resource* IE.

As a sub-embodiment of the above embodiment, there is one RS resource in the first RS resource group that is a SS/PBCH Block resource, and the SS/PBCH Block resource is identified by an *SSB-Index.*

As an embodiment, the step in box F50 in FIG. 5 is present and the method used in the second node for wireless communication comprises: performing a measurement on the first RS resource group.

As a sub-embodiment of the above embodiment, the measurement performed on the first RS resource group comprises: a measurement performed on each of the RS resources in the first RS resource group.

As a sub-embodiment of the above embodiment, the measurement is performed on at least one RS resource in the first RS resource group.

As a sub-embodiment of the above embodiment, the measurement of the RS signal transmitted in each of the RS resources of the first RS resource group.

As a sub-embodiment of the above embodiment, the measurement of the RS signal transmitted in at least one RS resource of the first RS resource group.

As a sub-embodiment of the above embodiment, the measurement performed on the first RS resource group includes channel measurement.

As a sub-embodiment of the above embodiment, the measurement performed on the first RS resource group is a channel measurement.

As a sub-embodiment of the above embodiment, the measurement performed on the first RS resource group comprises an interference measurement.

As a sub-embodiment of the above embodiment, the first node 100 obtains a channel measurement for calculating the first CSI Reporting based on the measurement performed on the first RS resource group.

As a sub-embodiment of the above embodiment, the first node 100 obtains an interference measurement for calculating the first CSI Reporting based on the measurement performed on the first RS resource group.

As an embodiment, the step in box F51 in FIG. 5 is present and the method used in the second node for wireless communication comprises: sending PUSCH on other cell except the second cell.

As a sub-embodiment of the above embodiment, other cells other than the second cell is a cell other than the second cell in at least one cell scheduled by the first DCI.

As a sub-embodiment of the above embodiment, the PUSCH being sent on other cells except the second cell comprises a CSI Reporting.

As a sub-embodiment of the above embodiment, the PUSCH being sent on other cells except the second cell comprises a plurality of CSI Reporting.

As a sub-embodiment of the above embodiment, the PUSCH being respectively sent on other cell except the second cell are each a CSI Reporting.

As a sub-embodiment of the above embodiment, the PUSCH being respectively sent on other cell except the second cell comprises one UL-SCH.

As a sub-embodiment of the above embodiment, the PUSCH being respectively sent on other cell except the second cell comprises a plurality of UL-SCH.

As a sub-embodiment of the above embodiment, the PUSCH being respectively sent on other cell except the second cell is an UL-SCH.

As an embodiment, the step in boxes F51 in FIG. 5 is present and the method used in the second node for wireless communication comprises: receiving PUSCH on other cell except the second cell.

As a sub-embodiment of the above embodiment, other cells other than the second cell is a cell other than the second cell in at least one cell scheduled by the first DCI.

As a sub-embodiment of the above embodiment, the PUSCH being respectively received on other cell except the second cell comprises a CSI Reporting.

As a sub-embodiment of the above embodiment, the PUSCH being respectively received on other cell except the second cell comprises a plurality of CSI Reporting.

As a sub-embodiment of the above embodiment, the PUSCH being respectively received on other cell except the second cell are each a CSI Reporting.

As a sub-embodiment of the above embodiment, the PUSCH being respectively received on other cell except the second cell comprises one UL-SCH.

As a sub-embodiment of the above embodiment, the PUSCH being respectively received on other cell except the second cell comprises a plurality of UL-SCH.

As a sub-embodiment of the above embodiment, the PUSCH being respectively sent on other cell except the second cell are each an UL-SCH.

### Embodiment 6

Embodiment 6 exemplifies a schematic diagram of a first DCI structure according to one embodiment of the present application, as shown in FIG. 6.

In Embodiment 6, the first DCI includes M domain subsets, where M is a positive integer greater than 1, and M domain subsets are respectively used to schedule PUSCH on M cells; the M domain subsets are respectively expressed as a domain subset #1, a domain subset #2, ..., a domain subset #M.

As an embodiment, the M domain subsets each include at least one bit.

As an embodiment, any of the M domain subsets includes at least one DCI domain.

As an embodiment, any of the M domain subsets includes a DCI domain.

As an embodiment, any of the M domain subsets includes a bit, in whole or in part, of a DCI domain.

As an embodiment, any of the M domain subsets includes a plurality of DCI domains.

As an embodiment, any of the M domain subsets is a DCI domain.

As an embodiment, the scheduling information of any of the M domain subsets includes one or more of time domain resources, frequency domain resources, CSI request, SRS request, HARQ Process Number, Antenna port(s), RV, MCS, or NDI.

As an embodiment, there are two domain subsets in the M domain subsets that respectively include different bits in the same DCI domain.

As an embodiment, there are two domain subsets in the M domain subsets that respectively include two different DCI domain.

As an embodiment, the M domain subsets include respectively different bits in the same DCI domain.

As an embodiment, the M domain subsets include respectively M different DCI domains.

As an embodiment, the M domain subsets are respectively M different DCI domains.

As an embodiment, the first DCI includes L domains, where L is a positive integer, and any of the subdomains in the M domain subsets include part of the bits in each of the L different DCI domains.

As a sub-embodiment of the above embodiment, any two sub-domains in the M domain subsets include different bits in a given DCI domain in the first DCI.

As an embodiment, the first domain in the first DCI is a domain subset in the M domain subsets.

As an embodiment, the first domain in the first DCI is a subdomain in the domain subset of the M domain subsets.

As an embodiment, the first domain in the first DCI is a domain subset in the M domain subset, and the domain subset comprising a *CSI request.*

As an embodiment, the first domain in the first DCI is a domain subset in the M domain subsets, and the domain subset comprising part or all of the bits of a *CSI request.*

As an embodiment, the first domain in the first DCI is a domain subset in the M domain subsets, and the domain subset is a *CSI request.*

As an embodiment, two domain subsets in the M domain subsets includes a *CSI request,* respectively.

As an embodiment, two domain subsets in the M domain subsets is a *CSI request,* respectively.

As an embodiment, two domain subsets of domains in the M domain subsets comprising part or all of the bits of a *CSI request,* respectively.

As a sub-embodiment of the above embodiment, the two domain subsets are used to trigger CSI Reporting on two cells, respectively, and the two cells are two cells in the M cells.

As a sub-embodiment of the above embodiment, at least two domain subsets depends on two trigger state sets, and the two trigger state sets belonging to the same *CSI-AperiodicTriggerList.*

As a sub-embodiment of the above embodiment, the two domain subsets depends on two trigger state sets respectively, and the two trigger state sets belong to the same *CSI-AperiodicTriggerList*, and one of the same *CSI-AperiodicTriggerList* belongs to the two trigger state sets simultaneously.

As a sub-embodiment of the above embodiment, the two domain subsets depends on two trigger state sets respectively, and the two trigger state sets belong to the same *CSI-AperiodicTriggerList*, and one trigger state in the same *CSI-AperiodicTriggerList* belongs to one trigger state set in addition to the two trigger state sets.

As an embodiment, any of the M domain subsets includes a *CSI request.*

As an embodiment, any of the M domain subsets is a *CSI request.*

As an embodiment, any of the M domain subsets includes all or part of the bits of a *CSI request.*

As a sub-embodiment of the above embodiment, the M domain subsets are used to trigger CSI reporting on the M cells, respectively, and the M cells are M cells scheduled by the M domain subsets of the first DCI.

As a sub-embodiment of the above embodiment, the M domain subsets depends on M trigger state sets, and the M trigger state sets belong to the same *CSI-AperiodicTriggerList*, and the M trigger state sets correspond to the M cells one by one, which the corresponding relationship may be implicit or explicit.

As a sub-embodiment of the above embodiment, the M domain subsets depends on M trigger state sets, and the M trigger state sets belong to the same *CSI-AperiodicTriggerList*, and the M trigger state sets include the same number of trigger states, respectively.

As a sub-embodiment of the above embodiment, the M domain subsets depends on M trigger state sets, and the M trigger state sets belong to the same *CSI-AperiodicTriggerList*, and there are at least two trigger state set in the M trigger state sets include a different number of trigger states, respectively.

As a sub-embodiment of the above embodiment, the M domain subsets depends on M trigger state sets, and the M trigger state sets belong to the same *CSI-AperiodicTriggerList*, and one trigger state of the *CSI-AperiodicTriggerList* belongs to at least two trigger state sets at the same time, and at least the two trigger state sets are at least two trigger state sets in the M trigger state sets.

As a sub-embodiment of the above embodiment, the M domain subsets depends on a M trigger states sets, respectively, and the M trigger state sets belongs to the same *CSI-AperiodicTriggerList*, and there is a trigger state in the *CSI-AperiodicTriggerList* which belongs to a trigger state set other than the M trigger state sets.

As an embodiment, the M domain subsets are ranked sequentially in the first DCI.

### Embodiment 7

Embodiment 7 exemplifies a schematic diagram of the relationship between a first message set, a first message, a first *CSI-AperiodicTriggerList*, a first trigger state set, and a second trigger state set according to one embodiment of the present application, as shown in FIG. 7.

In Embodiment 7, the first message set includes a first message indicating a first *CSI-AperiodicTriggerList,* the first trigger state set and second trigger state set both of which belong to the first *CSI-AperiodicTriggerList.*

As an embodiment, the first message set consists of the first message.

As an embodiment, the first message is configured to a first cell.

As an embodiment, the first *CSI-AperiodicTriggerList* is configured to the first cell.

As an embodiment, the first *CSI-AperiodicTriggerList* includes at least one trigger state set, at least one cell scheduled by the first domain in the first DCI depends on at least one trigger state set, respectively.

As an embodiment, the first *CSI-AperiodicTriggerList* includes at least one trigger state set, and at least one trigger state set including at least one trigger state, respectively.

As an embodiment, the first *CSI-AperiodicTriggerList* includes a maximum of 128 trigger states, and the up to 128 trigger states correspond to a maximum of 128 *CSI-ReportConfig,* respectively.

As an implementation, the first trigger state set includes part or all of the trigger states of a first *CSI-AperiodicTriggerList.*

As an embodiment, the first trigger state set is a first *CSI-AperiodicTriggerList.*

As an embodiment, the second trigger state set includes part or all of the trigger states of a first *CSI-AperiodicTriggerList.*

As an embodiment, the second trigger state set is a first *CSI-AperiodicTriggerList.*

As an embodiment, the first trigger state set includes up to 128 trigger states.

As an embodiment, the first trigger state set includes up to 63 trigger states.

As an embodiment, the second trigger state set includes up to 128 trigger states.

As an embodiment, the second trigger state set includes up to 63 trigger states.

As an embodiment, one trigger state in the first *CSI-AperiodicTriggerStateList* that belongs to both the first trigger state set and second trigger state set.

As an embodiment, a trigger state in the first *CSI-AperiodicTriggerStateList* that belongs to a trigger state set other than the first trigger state set and second trigger state set.

As an embodiment, any one of the trigger state of a first *CSI-AperiodicTriggerStateList* belongs to a first trigger state set and/or second trigger state set.

As an embodiment, the first domain in the first DCI includes N candidate values, and the N is a positive integer; the N candidate values correspond to N target trigger states, and the N target trigger states indicate N *CSI-ReportConfigs* sets, respectively, and the corresponding relationships of the N candidate values and the N target trigger states are configured by the trigger state set dependent on the first domain in the first DCI.

As a sub-embodiment of the above embodiment, the N candidate values indicate N *CSI-ReportConfig* set, respectively.

As a sub-embodiment of the above embodiment, any one of the N*-CSI-ReportConfig* sets includes at least one *CSI-ReportConfig.*

As a sub-embodiment of the above embodiment, any one of the N-*CSI-ReportConfig* sets includes a *CSI-ReportConfig.*

As a sub-embodiment of the above embodiment, any one of the *CSI-ReportConfig* sets includes a plurality of *CSI-ReportConfig.*

As a sub-embodiment of the above embodiment, any one of the *CSI-ReportConfig* sets includes up to 16 *CSI-ReportConfig.*

As a sub-embodiment of the above embodiment, the N candidate values indicate N *CSI-AperiodicTriggerState*, respectively.

As a sub-embodiment of the above embodiment, the N candidate values indicate N *associatedReportConfigInfoList,* respectively.

### Embodiment 8

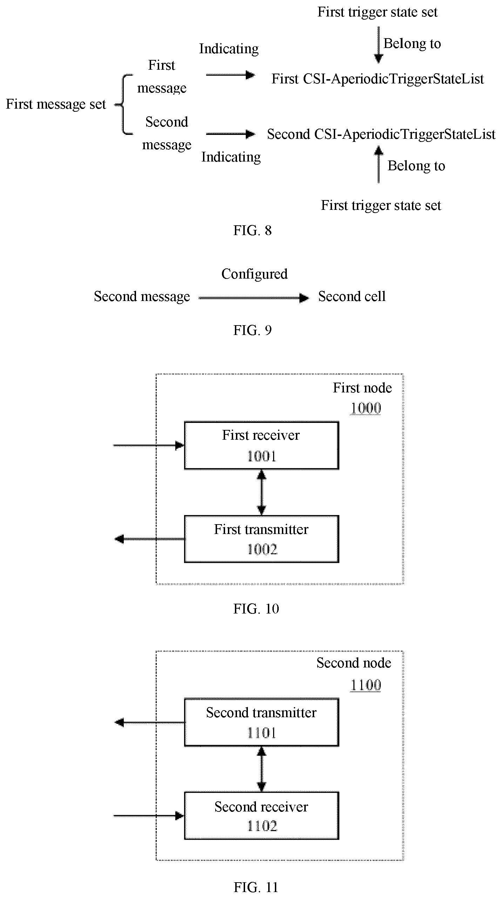

Embodiment 8 illustrates a schematic diagram of the relationship between a first message set, a first message, a second message, a first *CSI-AperiodicTriggerList*, a second *CSI-AperiodicTriggerList*, a first trigger state set, and a second trigger state set according to another embodiment of the present application, as shown in FIG. 8.

In Embodiment 8, the first message set includes a first message and a second message, and the first message and the second message indicating the first *CSI-AperiodicTriggerList* and the second *CSI-AperiodicTriggerList*, respectively, and the first trigger state set and the second trigger state set belonging to the first *CSI-AperiodicTriggerList* and the second *CSI-AperiodicTriggerList*, respectively.

As an embodiment, the first message set consists of the first message and the second message.

As an embodiment, the first message set includes at least one message in addition to the first message and the second message.

As a sub-embodiment of the above embodiment, the first message, the second message, and the other message other than the first message and the second message are carried by the same RRC IE.

As a sub-embodiment of the above embodiment, the first message, the second message, and another message other than the first message and the second message are each carried by a different RRC IE.

As a sub-embodiment of the above embodiment, the presence of any two messages in the first message, the second message, and another message in addition to the first message and the second message is carried by the same RRC IE.

As an embodiment, the second message is carried by a higher layer signaling.

As an embodiment, the second message is carried by a RRC signaling.

As an embodiment, the second message is carried by a RRC IE.

As an embodiment, the second message includes a RRC IE.

As an embodiment, the second message includes a *CSI-MeasConfig* IE.

As an embodiment, the second message includes information from all or part of the domain of a *CSI-MeasConfig* IE.

As an embodiment, the second message is a *CSI-MeasConfig* IE.

As an embodiment, the first message and the second message are carried by different RRC IEs, respectively.

As an embodiment, the second cell is configured with two schedule cells and the first message is configured to the two schedule cells and the cell outside the first cell.

As an embodiment, the first trigger state set and the second trigger state set are respectively configured.

As an embodiment, the first *CSI-AperiodicTriggerList* and the *second CSI-AperiodicTriggerLists* are respectively configured.

As an embodiment, the first trigger state set includes all or part of the trigger states of a first *CSI-AperiodicTriggerList.*

As an embodiment, the first trigger state set is the first *CSI-AperiodicTriggerList.*

As an embodiment, the second trigger state set includes all or part of the trigger states of a second *CSI-AperiodicTriggerList.*

As an embodiment, the second trigger state set is the second *CSI-AperiodicTriggerList.*

### Embodiment 9

Embodiment 9 exemplifies a schematic diagram of a second message configured to a second cell according to one embodiment of the present application, as shown in FIG. 9.

As an embodiment, when the second message belongs to *the ServingCellConfig* IE of the second cell, the second message is configured to the second cell.

As an embodiment, when the second message belongs to the *BWP-Downlink* IE of the second cell, the second message is configured to the second cell.

As an embodiment, when the second message belongs to a *CSI-MeasConfig* IE configured with the second cell, the second message is configured to the second cell.

As an embodiment, when the second message belongs to a *BWP-DownlinkDedicated* IE configured to the second cell, the second message is configured to the second cell.

### Embodiment 10

Embodiment 10 illustrates a structural block diagram of a processing apparatus for use in a first node according to one embodiment of the present application, as shown in FIG. 10. In FIG. 10, the processing apparatus 1000 in the first node includes a first receiver 1001 and a first transmitter 1002.

The first receiver 1001 receiving the first message set and receiving the first DCI on the first cell; the first transmitter 1002 sending at least the first CSI Reporting on the PUSCH of the second cell.

In Embodiment 10, the first message set comprises a first message, and the first message being used to indicate a first trigger state set, the first message being configured for the first cell, and the first trigger state set comprising at least one trigger state; the first DCI is used to schedule a PUSCH on at least one cell; the second cell is one of at least one cell; the first DCI comprises a first domain, and the first domain of the first DCI is used to trigger the first CSI Reporting; the first domain in the first DCI is used to indicate target trigger state from the dependent trigger state set, and the target trigger state is used to configure the first CSI Reporting; the dependent trigger state set is related to at least one cell; when at least one cell includes only the second cell, the dependent trigger state set is the first trigger state set; when at least one cell includes a third cell, the dependent trigger state set is a second trigger state set.

As an embodiment, the first receiver performs measurement on a first RS resource group.

In Embodiment 14, the measurement performed on the first RS resource group is used to calculate the first CSI and the target trigger state is used to determine the first RS resource group.

As an embodiment, the first message indicates a first *CSI-AperiodicTriggerStateList,* the first trigger state set and second trigger state set both belonging to the first *CSI-AperiodicTriggerStateList.*

As an embodiment, the first message set includes a second message, and the first message and the second message indicate a first *CSI-AperiodicTriggerStateList* and a second *CSI-AperiodicTriggerStateList,* respectively, the first trigger state set and second trigger state set belonging to the first *CSI-AperiodicTriggerStateList* and the second *CSI-AperiodicTriggerStateList,* respectively.

As an embodiment, the second message is configured to the second cell.

As an embodiment, the first node device is an user equipment.

As an embodiment, the first node device is a relay node device.

As an embodiment, the first transmitter 1002 sends signals on the PUSCH of the second cell in addition to the first CSI Reporting.

As an embodiment, the first receiver 1001 includes at least one of {the antenna 452, the receiver 454, the receiving processor 456, the multi-antenna receiving processor 458, the controller/processor 459, the memory 460, the data source 467} of Embodiment 4.

As an embodiment, the first transmitter 1002 includes at least one of {the antenna 452, the transmitter 454, the multi-antenna transmitting processor 457, the transmitting processor 468, the controller/processor 459, the memory 460, the data source 467} of Embodiment 4.

### Embodiment 11

Embodiment 11 illustrates a structural block diagram of a processing apparatus for use in a first node according to one embodiment of the present application, as shown in FIG. 11. In FIG. 11, the processing apparatus 1100 in the second node includes a second transmitter 1101 and a second receiver 1102.

In embodiment 11, the second transmitter 1101 sending a first message set, sending a first DCI on the first cell; the second receiver 1102 receiving at least a first CSI Reporting on the PUSCH of the second cell.

In Embodiment 11, the first message set comprises a first message, and the first message being used to indicate a first trigger state set, the first message being configured for the first cell, and the first trigger state set comprising at least one trigger state; the first DCI is used to schedule a PUSCH on at least one cell; the second cell is one of at least one cell; the first DCI comprises a first domain, and the first domain of the first DCI is used to trigger the first CSI Reporting; the first domain in the first DCI is used to indicate target trigger state from the dependent trigger state set, and the target trigger state is used to configure the first CSI Reporting; the dependent trigger state set is related to at least one cell; when at least one cell includes only the second cell, the dependent trigger state set is the first trigger state set; when at least one cell includes a third cell, the dependent trigger state set is a second trigger state set.

As an embodiment, the second transmitter 1101 sending a reference signal on a first RS resource group.

In Embodiment 11, the measurement performed on the first RS resource group is used to calculate the first CSI and the target trigger state is used to determine the first RS resource group.

As an embodiment, the second node is a base station device.

As an embodiment, the second node is an user equipment.

As an embodiment, the second node is a relay node device.

As an embodiment, the second transmitter 1101 sends an RS on the first RS resource group.

As an embodiment, the second receiver 1102 receives signals on the PUSCH of the second cell in addition to the first CSI Reporting.

As an embodiment, the second transmitter 1101 includes at least one of {the antenna 420, the transmitter 418, the transmitting processor 416, the multi-antenna transmitting processor 471, the controller/processor 475, the memory 476} of Embodiment 4.

As an embodiment, the second receiver 1102 includes at least one of {the antenna 420, the receiver 418, the receiving processor 470, the multi-antenna receiving processor 472, the controller/processor 475, the memory 476} of Embodiment 4.

Those of ordinary skill in the art may understand that all or part of the steps in the above described methods can be accomplished by instructing relevant hardware through a program that can be stored in computer-readable storage media, such as read only memory, hard disk, or optical disk. Optionally, the steps of the above embodiments, in whole or in part, may also be implemented using one or more integrated circuits. Accordingly, the various module units in the above embodiments may be implemented in the form of hardware or in the form of software function modules. The present application is not limited to the combination of software and hardware of any particular form. The user equipment, terminals, and UEs in the present application include but are not limited to drones, communication modules on drones, remotely controlled aircraft, aircraft, small aircraft, cell phones, tablets, notebooks, in-vehicle communication devices, transportation vehicles, cars, RSU, wireless sensors, network cards, IoT terminals, RFID terminals, NB-IOT terminals, Machine Type Communication (MTC) terminals, enhanced MTC (eMTC) terminals, data cards, Internet cards, in-vehicle communication devices, low-cost mobile phones, low-cost tablet computers, and other wireless communication devices. The base stations or system devices in the present application include but are not limited to, macro cellular base stations, micro cellular base stations, small cellular base stations, femtocell base stations, relay base stations, eNB, gNB, Transmitter Receiver Point (TRP), GNSS, relay satellite, satellite base stations, air base stations, Road Side Units (RSUs), drones, test devices, such as transceiver devices for simulation of base station functions, signaling testers and other wireless communication devices.

Those skilled in the art will understand that the present disclosure can be implemented in other specific forms without departing from its core or essential characteristics. Thus, the presently disclosed embodiments should in any event be considered descriptive rather than restrictive. The scope of the disclosure is determined by the appended claims, not by the preceding description, and all variations within their equivalent meaning and area are considered to be included therein.

## Claims

1. A first node for wireless communication, wherein it comprises:
a first receiver receiving a first message set, wherein the first message set includes a first message, and the first message being used to indicate a first trigger state set, and the first message being configured for a first cell, and the first trigger state set comprising at least one trigger state; receiving a first DCI on the first cell, wherein the first DCI is used to schedule PUSCH on at least one cell;
a first transmitter sending at least a first CSI Reporting on a PUSCH of a second cell, the second cell being one of at least one cells;
wherein the first DCI comprises a first domain, and the first domain in the first DCI is used to trigger the first CSI Reporting; the first domain in the first DCI indicates a target trigger state from a dependent trigger state set, and the target trigger state is used to configure the first CSI Reporting; the dependent trigger state set is associated with at least one cell; when at least one cell includes only the second cell, the dependent trigger state set is the first trigger state set; when at least one cell includes a third cell, the dependent trigger state set is the second trigger state set.

2. The first node according to Claim 1, wherein it comprises:
the first receiver performing a measurement on a first RS resource group;
wherein, the measurement performed on the first RS resource set is used to calculate the first CSI, and the target trigger state is used to determine the first RS resource group.

3. The first node according to Claim 1 or 2, wherein the first message indicates a first CSI-AperiodicTriggerStateList, the first trigger state set and second trigger state set both belonging to the first CSI-AperiodicTriggerStateList.

4. The first node according to Claim 1 or 2, wherein the first message set comprises a second message, and the first message and the second message indicate a first CSI-AperiodicTriggerStateList and a second CSI-AperiodicTriggerStateList, respectively, and the first trigger state set and the second trigger state set belong to the first CSI-AperiodicTriggerStateList and the second CSI-AperiodicTriggerStateList, respectively.

5. The first node according to Claim 4, wherein the second message is configured to the second cell.

6. A second node for wireless communication, wherein it comprises:
a second transmitter sending a first message set, wherein the first message set includes a first message, and the first message being used to indicate a first trigger state set, and the first message being configured for a first cell, and the first trigger state set comprising at least one trigger state; sending a first DCI on the first cell, wherein the first DCI is used to schedule PUSCH on at least one cell;
a second receiver receiving at least a first CSI Reporting on a PUSCH of a second cell, the second cell being one cell in at least one cell;
wherein the first DCI comprises a first domain, and the first domain in the first DCI is used to trigger the first CSI Reporting; the first domain in the first DCI indicates a target trigger state from a dependent trigger state set, and the target trigger state is used to configure the first CSI Reporting; the dependent trigger state set is associated with at least one cell; when at least one cell includes only the second cell, the dependent trigger state set is the first trigger state set; when at least one cell includes a third cell, the dependent trigger state set is the second trigger state set.

7. The second node according to Claim 6, wherein it comprises:
the second transmitter transmitting a reference signal on a first RS resource group;
wherein, the measurement performed on the first RS resource set is used to calculate the first CSI, and the target trigger state is used to determine the first RS resource group.

8. The second node according to Claim 6 or 7, wherein the first message indicates a first CSI-AperiodicTriggerStateList, the first trigger state set and second trigger state set both belong to the first CSI-AperiodicTriggerStateList.

9. The second node according to Claim 6 or 7, wherein the first message set comprises a second message, and the first message and the second message indicate a first CSI-AperiodicTriggerStateList and a second CSI-AperiodicTriggerStateList, respectively, and the first trigger state set and the second trigger state set belong to the first CSI-AperiodicTriggerStateList and the second CSI-AperiodicTriggerStateList, respectively.

10. The second node according to Claim 9, wherein the second message is configured to the second cell.

11. A method used in a first node for wireless communication, wherein it comprises:
receiving a first message set, wherein the first message set includes a first message, and the first message being used to indicate a first trigger state set, and the first message being configured for a first cell, and the first trigger state set comprising at least one trigger state; receiving a first DCI on the first cell, wherein the first DCI is used to schedule PUSCH in at least one cell;
sending at least a first CSI Reporting on the PUSCH of a second cell, and the second cell is one cell in at least one cell;
wherein the first DCI comprises a first domain, and the first domain in the first DCI is used to trigger the first CSI Reporting; the first domain in the first DCI indicates a target trigger state from a dependent trigger state set, and the target trigger state is used to configure the first CSI Reporting; the dependent trigger state set is associated with at least one cell; when at least one cell includes only the second cell, the dependent trigger state set is the first trigger state set; when at least one cell includes a third cell, the dependent trigger state set is the second trigger state set.

12. The method in the first node according to Claim 11, wherein it comprises:
performing a measurement on a first RS resource group;
wherein, the measurement performed on the first RS resource set is used to calculate the first CSI, and the target trigger state is used to determine the first RS resource group.

13. The method in the first node according to Claim 11 or 12, wherein the first message indicates a first CSI-AperiodicTriggerStateList, the first trigger state set and second trigger state set both belonging to the first CSI-AperiodicTriggerStateList.

14. The method in the first node according to Claim 11 or 12, wherein the first message set comprises a second message, and the first message and the second message indicate a first CSI-AperiodicTriggerStateList and a second CSI-AperiodicTriggerStateList, respectively, and the first trigger state set and the second trigger state set belong to the first CSI-AperiodicTriggerStateList and the second CSI-AperiodicTriggerStateList, respectively.

15. The method in the first node according to Claim 14, wherein the second message is configured to the second cell.

16. A method used in a second node for wireless communication, wherein it comprises:
sending a first message set, wherein the first message set includes a first message, and the first message being used to indicate a first trigger state set, and the first message being configured for a first cell, and the first trigger state set comprising at least one trigger state; sending a first DCI on the first cell, wherein the first DCI is used to schedule PUSCH on at least one cell;
receiving at least a first CSI Reporting on the PUSCH of a second cell, and the second cell being one of at least one cells;
wherein the first DCI comprises a first domain, and the first domain in the first DCI is used to trigger the first CSI Reporting; the first domain in the first DCI indicates a target trigger state from a dependent trigger state set, and the target trigger state is used to configure the first CSI Reporting; the dependent trigger state set is associated with at least one cell; when at least one cell includes only the second cell, the dependent trigger state set is the first trigger state set; when at least one cell includes a third cell, the dependent trigger state set is the second trigger state set.

17. The method in the second node according to Claim 16, wherein it comprises:
sending a reference signal on a first RS resource group;
wherein, the measurement performed on the first RS resource set is used to calculate the first CSI, and the target trigger state is used to determine the first RS resource group.

18. The method in the second node according to Claim 16 or 17, wherein the first message indicates a first CSI-AperiodicTriggerStateList, the first trigger state set and second trigger state set both belong to the first CSI-AperiodicTriggerStateList.

19. The method in the second node according to Claim 16 or 17, wherein the first message set comprises a second message, and the first message and the second message indicate a first CSI-AperiodicTriggerStateList and a second CSI-AperiodicTriggerStateList, respectively, the first trigger state set and second trigger state set both belong to the first CSI-AperiodicTriggerStateList and the second CSI-AperiodicTrigerStateList, respectively.

20. The method in the second node according to Claim 19, wherein the second message is configured to the second cell.
